# EUROPÄISCHE PATENTANMELDUNG

(11) **EP 1 714 771 A2**
(43) Veröffentlichungstag der Anmeldung: **25.10.2006**
(21) Anmeldenummer: 06008186.6
(22) Anmeldetag: 20.04.2006
(51) Int. Cl.: B29C 65/16

(54) **Verfahren und Vorrichtung zum Verbinden von zwei Werkstücken aus thermoplastischen Kunststoffen durch Laserschweißen**

(30) Priorität: 20.04.2005 DE 102005018727
(71) Anmelder: Maschinenfabrik Spaichingen GmbH, 78549 Spaichingen (DE)
(72) Erfinder: Brünner, Dieter, 72461 Albstadt (DE); Jundt, Hartmut, 78628 Rottweil (DE)
(74) Vertreter: Freiherr von Schorlemer, Reinfried

(57) **Zusammenfassung**

Die Erfindung betrifft ein Verfahren und eine Vonichtung zum Verschweißen von zwei Werkstücken (1, 2) aus thermoplastischen Kunststoffen mittels Laserstrahlung. Eines der beiden Werkstücke (1) besteht aus einem die Laserstrahlung absorbierenden Material und ist mit wenigstens zwei erhaben vorstehenden Strukturen (16) versehen, die durch Spalte voneinander getrennt sind. Das andere Werkstück (2) besteht aus einem für die Laserstrahlung transparenten Material. Die Verschweißung erfolgt dadurch, dass die Laserstrahlung nacheinander auf die erhabenen Strukturen (16) gerichtet wird und die beiden Werkstücke (1, 2) dabei lokal gegeneinander gedrückt werden. Außerdem wird der Verschweißvorgang zur Vermeidung von Einfallstellen in der Oberfläche (3) des die Laserstrahlung absorbierenden Werkstücks (1) so gesteuert, dass die erhabenen Strukturen (16) nur bis zu einer vorgewählten Resthöhe (b) abgeschmolzen werden, zwischen den beiden Werkstücken (1, 2) ein Spalt (20) verbleibt und ein aus abgeschmolzenem Material bestehender Schweißwulst (21) ohne Berührung mit dem absorbierenden Werkstück (1) in dem Spalt (20) aufgenommen wird. Die erfindungsgemäße Vorrichtung weist eine Einrichtung auf, mittels derer die Resthöhe (b) eingestellt werden kann (Fig. 2b).

## Beschreibung

Die Erfindung betrifft ein Verfahren zum Verbinden von Werkstücken aus thermoplastischen Kunststoffen durch Laserschweißen und eine Vorrichtung nach dem Oberbegriff des Anspruchs 13.

Die Verbindung zweier Werkstücke, von denen wenigstens eines eine empfindliche Oberfläche hat, stellt immer noch ein Problem dar. Dies gilt beispielsweise im Kraftfahrzeugbereich für die Verbindung der Außen- und Innenteile von Stoßfängern und anderen großflächigen Bauteilen. Die Außenteile bestehen hier aus einer dünnen, meistens weniger als 3 mm starken Außenhaut, die sichtbar ist und daher optisch ansprechend ausgebildet sein soll. Zu diesem Zweck wird die Außenhaut z. B. aus einem Polypropylen (PP), Polycarbonat (PC), Polybutylenterephthalat (PBT), Acrylnitril-Butadien-Styrol-Copolymer (ABS) oder thermoplastischen Polyolefin (TPO) oder irgendeiner Mischung oder Kombination davon hergestellt und zusätzlich mit einer Lackierung versehen. Dagegen sind die Abmessungen und sonstigen Eigenschaften der aus denselben Materialien hergestellten Innenteile weniger bedeutsam, da diese z. B. aus Verstärkungsteilen, Halterungen, Adaptern für Abstandssensoren oder sonstigen Funktionsteilen bestehen, die auf den Rückseiten der Bauteile zu liegen kommen und von außen her in der Regel unsichtbar sind.

Eine für den genannten Zweck geeignete Verbindungstechnik muss sicherstellen, dass sie einerseits eine ausreichend große Dauerfestigkeit der Verbindung gewährleistet, andererseits nicht zu Beschädigungen oder sonstigen Beeinträchtigungen der empfindlichen Oberfläche der Außenhaut führt. Da diese Forderung mit üblichen, kostengünstig durchführbaren Schweißverfahren nicht erfüllt werden kann, werden für diesen Zweck vielfach verschiedene Klebetechniken eingesetzt, die jedoch sämtlich technisch aufwendig, teuer und insbesondere bei Serienfertigungen nur schwer beherrschbar sind. Außerdem müssen vergleichsweise lange, mehrere Minuten dauernde Prozesszeiten in Kauf genommen werden.

Eine grundsätzlich ebenfalls für den genannten Zweck geeignete Technologie ist das Laserschweißen, insbesondere in Form des sog. Durchstrahl-Schweißens. Hierbei wird ein erstes Werkstück aus einem für die Laserstrahlung transparenten Material mit einem zweiten Werkstück aus einem für die Laserstrahlung absorbierenden Material dadurch verbunden, dass die Laserstrahlung durch das transparente Werkstück und eine zwischen den beiden Werkstücken bestehende Grenzfläche hindurch auf das absorbierende Werkstück gerichtet wird. Durch die dabei im absorbierenden Material entstehende Schmelze wird im Bereich der Grenzfläche Wärme per Wärmeleitung auch auf das transparente Material übertragen, wodurch dieses ebenfalls aufgeschmol-, zen und dadurch ein Schweißprozess eingeleitet wird, der nach dem Abkühlen der Werkstücke zu einer festen Schweißverbindung führt (DE 101 01 240 A1). Durch mechanisches Zusammendrücken der beiden Werkstücke während des Schweißvorgangs kann außerdem dem durch die Volumenvergrößerung der Schmelze verursachten Schmelzdruck entgegengewirkt und dadurch die Festigkeit der Schweißnaht verbessert werden (EP 1 405 713 A1).

Laserschweißverfahren dieser Art sind insbesondere in drei Varianten bekannt. Beim Konturenschweißen wird ein Laser entlang einer vorgewählten Schweißzone geführt, was vergleichsweise kleine Arbeitsgeschwindigkeiten zur Folge hat. Beim Simultanschweißen wird die gesamte Schweiß- bzw. Fügezone simultan, d. h. gleichzeitig in einen schmelzflüssigen Zustand überführt, wozu leistungsstarke Laser benötigt werden. Das Quasi-Simultan-Schweißen sieht schließlich vor, einen Laserstrahl mit Hilfe von beweglichen Spiegeln wiederholt über dieselbe Schweißzone zu lenken, um die Werkstücke dadurch zwar wie beim Simultanschweißen längs der gesamten Schweißzone aufzuschmelzen, diesen Zustand aber durch mehrfaches Hin- und Herfahren des Laserstrahls zu erreichen. Dabei wird der Schweißprozess bevorzugt über den sog. Setzweg überwacht, indem eines der Werkstücke mit einer längs der Schweißzone verlaufenden, erhabenen Struktur versehen und der Schweißvorgang so gesteuert wird, dass die Höhe der erhabenen Struktur beim Aufschmelzen durch das Zusammendrücken der Werkstücke reduziert wird. Nachteilig hierbei ist u.a., daß die gesamte Schweißzone so schnell von der Laserstrahlung überfahren werden muß, daß die Temparatur der erhabenen Struktur beim jeweils nächsten Überfahren tatsächlich weiter erhöht wird.

Für das Verbinden von Werkstücken längs großflächiger Schweißzonen sind die genannten Laserschweißverfahren daher bisher weniger gut geeignet. Besonders störend ist, daß die beiden Werkstücke jeweils längs der gesamten Schweißzone bzw. Fügelinie gegeneinander gedrückt und gleichmäßig erwärmt werden müssen, um überall etwa vorhandene Toleranzen ausgleichen zu können oder im Fall von erhabenen Strukturen überall einen gleichen Setzweg zu erreichen. Daher sind diese Verfahren nur für Verbindungen mit vergleichbar kleinen Schweißzonen anwendbar. Ein weiteres Problem besteht darin, dass es aufgrund von mechanischen Spannungen, die sich beim Schweißvorgang unvermeidlich in den Materialien aufbauen, während des nachfolgenden Abkühlvorgangs zu sog. Einfallstellen in der äußeren Oberfläche des Außenteils kommt. Diese Einfallstellen bilden sichtbare Dellen und behindern das Erreichen der gewünschten Oberflächenqualität (Class A-Oberflächen). Es sind daher bereits verschiedene Vorschläge bekannt geworden, diese Spannungen während des Schweißprozesses durch eine zusätzliche Erwärmung der Werkstücke in den an die Schweißzonen grenzenden Nachbarbereichen zu reduzieren (DE 102 61 642 A1, EP 1 440 784 A1), doch haben diese Vorschläge nicht zur Vermeidung der Einfallstellen geführt. Das gilt auch bei Anwendung anderer bekannter Vorschläge (DE 199 19 191 A1, DE 199 44 745 A1), nach denen geschlossene, z. B. kreisförmige oder ovale Schweißzonen, wie sie beim Verbinden eines Behälters mit einem Deckel oder beim Verbinden von Kfz-Scheinwerferteilen vorhanden sind, auf der ganzen Schweißzonenlänge gleichzeitig erwärmt und plastifiziert werden.

Die Anwendung von erhabenen Strukturen beim Laserschweißen ist auch für ganz andere Zwecke bekannt. Bei einer bekannten Verfahrensweise geht es beispielsweise um die Verbindung eines Behälters mit einem Deckel und die Erhöhung der Festigkeit der Verbindung durch die Anbringung einer zusätzlichen, formschlüssig wirkenden Verbindung (DE 103 06 697 A1). Die Vermeidung von Einfallstellen ist mit dieser Verfahrensweise weder beabsichtigt noch möglich. Da hier zusätzlich gefordert wird, die Spalte zwischen den beiden Werkstücken während des Schweißvorgangs auf Null zu reduzieren, würden sich bei Anwendung der bekannten Technik auf dünne Werkstücke mit empfindlichen Oberflächen unvermeidbar die als nachteilig angesehenen Einfallstellen ergeben. Dagegen werden bei einer anderen bekannten Verfahrensweise die erhabenen Strukturen an einem der Werkstücke als Materialreserve genutzt, um aus dieser beim Schweißvorgang ein zwischen die beiden Werkstücke gelegtes, aus einem Metall bestehendes Sieb oder Gitternetz zu füllen (EP 0 158 528 A1). Das Bilden von Einfallstellen auf der Sichtseite eines der Werkstücke, insbesondere wenn dieses eine Dicke von höchstens 3 mm besitzt, kann durch diese Maßnahme ebenfalls nicht verhindert werden.

Ausgehend davon besteht das technische Problem der vorliegenden Erfindung in der Schaffung von Verfahren und Vorrichtungen, die eine Anwendung des Laserschweißens zur Herstellung von Verbindungen der beschriebenen Art ermöglichen und daher unter Beibehaltung einer hohen Oberflächenqualität insbesondere für die Verbindung von großflächigen (z. B. wenigstens 300 mm x 300 mm großen) und dünnen (z. B. höchstens 3 mm starken) sowie eine hohe Oberflächengüte aufweisenden Werkstücken aus thermoplastischem Material mit anderen, ebenfalls aus thermoplastischem Kunststoff bestehenden Werkstücken geeignet sind.

Erfindungsgemäß wird dieses Problem mit den kennzeichnenden Merkmalen der Ansprüche 1 und 13 gelöst. Als Ergebnis der Erfindung wird außerdem ein Verbundbauteil mit den Merkmalen des Anspruchs 19 erhalten.

Die Erfindung führt zu dem überraschenden Ergebnis, dass sich die bisher unvermeidlichen Einfallstellen in den sichtbaren Oberflächen des außen liegenden Werkstücks durch die Anwendung und nur teilweise Abschmelzung der erhabenen Strukturen insbesondere dadurch völlig vermeiden lassen, dass anstelle langer, durchgehend ausgebildeter Schweißnähte wenigstens zwei, vorzugsweise mehr als zwei vergleichsweise kurze (z. B. maximal 40 mm lange) Schweißnahtabschnitte vorgesehen und diese durch dazwischen liegende, ausreichend lange oder breite (z. B. mindestens 4 mm bis 10 mm lange oder breite) Spalte bzw. Zwischenräume (Lücken) voneinander beabstandet werden. Die erfindungsgemäßen Verfahren und Vorrichtungen sind daher insbesondere zur Verbindung von Werkstücken geeignet, für die Class A-Oberflächen vorausgesetzt werden. Vorteilhaft ist außerdem, daß die Höhen der erhabenen Strukturen und die Setzwege pro erhabene Struktur individuell festgelegt und so positioniert werden können, daß möglichst kleine Setzwege für den lokalen Toleranzausgleich benötigt werden.

Die Erfindung wird nachfolgend in Verbindung mit den beiliegenden Zeichnungen an Ausführungsbeispielen näher erläutert. Es zeigen:
Fig. 1a und 1b schematisch das Verschweißen von zwei Werkstücken aus thermoplastischen Materialien durch Laserstrahlung nach dem Stand der Technik;
Fig. 2a und 2b schematisch das erfindungsgemäße Verschweißen von zwei Werkstücken aus thermoplastischen Materialien durch Laserstrahlung;
Fig. 3 und 4 der Fig. 2b entsprechende Ansichten von zwei weiteren Ausführungsbeispielen des erfindungsgemäßen Laserschweißverfahrens;
Fig. 5 in einer schematischen, perspektivischen Ansicht das Herstellen einer Schweißverbindung entsprechend Fig. 2b; und
Fig. 6 schematisch die für die Erfindung wesentlichen Teile einer erfindungsgemäßen Vorrichtung zum Laserschweißen.

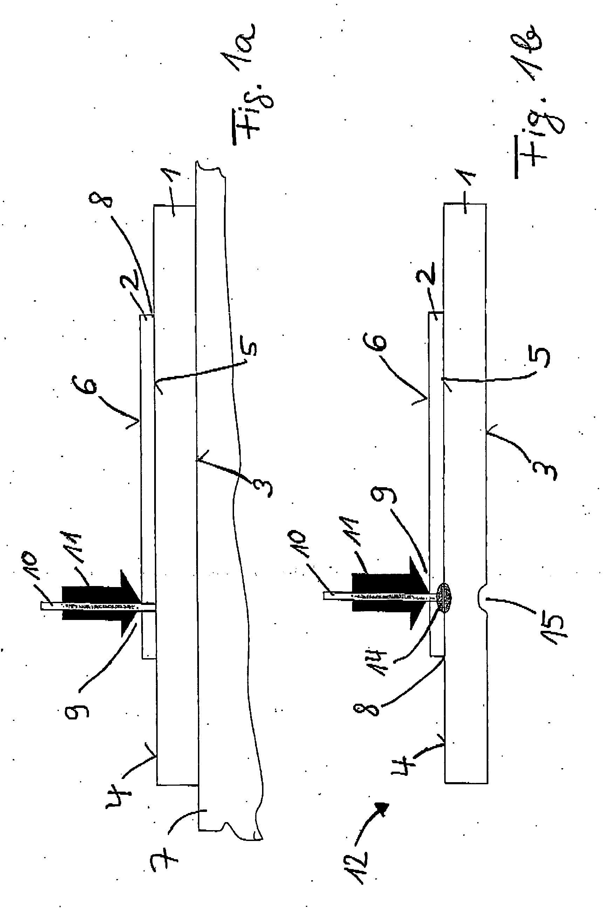

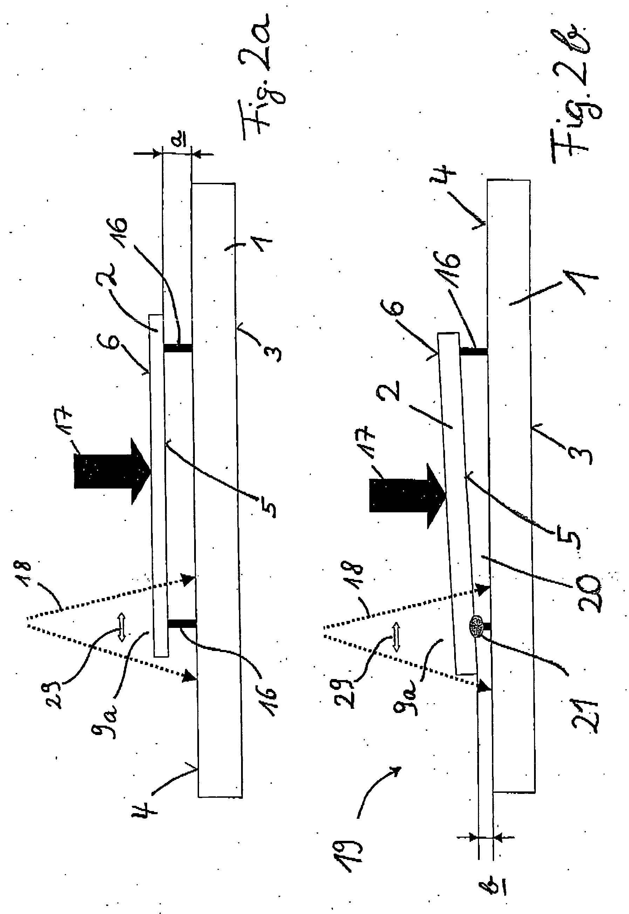

Fig. 1a zeigt ein erstes Werkstück 1, das z. B. aus einer dünnen, ca. 3 mm starken, in der Zeichnung plattenförmig dargestellten Außenhaut für einen Stoßfänger besteht, und ein aus demselben Material bestehendes, ebenfalls plattenförmig dargestelltes Werkstück 2, das z. B. ein Verstärkungsteil für das Werkstück 1 bilden soll. Das Werkstück 1 weist in Fig. 1a eine untere Oberfläche 3 und eine obere Oberfläche 4 auf, während das Werkstück 2 in Fig. 1a eine untere Oberfläche 5 und eine obere Oberfläche 6 besitzt.

Zur Anwendung von Laserstrahlung zum Verschweißen der beiden Werkstücke 1, 2 wird das Werkstück 1 z. B. aus einem mit Ruß angereicherten Polypropylen hergestellt, damit es die verwendete Laserstrahlung weitgehend absorbiert, während das Werkstück 2 z. B. aus demselben, jedoch im Naturzustand belassenen Polypropylen hergestellt wird, damit es für die verwendete Laserstrahlung weitgehend transparent ist. Der Verschweißvorgang (= Konturenschweißen oder Simultanschweißen) wird in der Weise durchgeführt, dass zunächst das Werkstück 1 mit seiner Oberfläche 3 auf eine Aufnahme 7 aufgelegt und auf dieser befestigt wird. Danach wird das Werkstück 2 mit seiner unteren Oberfläche 5 unter Bildung einer Grenzfläche 8 auf die Oberfläche 4 des Werkstücks 1 aufgelegt, wobei die Oberflächen 4 und 5 möglichst eben sein sollten. Schließlich wird im Bereich einer ausgewählten Schweißzone 9 ein Laserstrahl 10 auf die Werkstücke 1, 2 gerichtet und gleichzeitig mittels eines Niederhalters 11 im Bereich der Schweißzone 9 ein Druck auf das Werkstück 2 ausgeübt, um an dieser Stelle einen möglichst kleinen bzw. gar keinen Spalt zwischen den Werkstücken 1, 2 zu erhalten. In Folge der Absorption des Laserstrahls 10 schmilzt das Werkstück 1 im Bereich der Grenzfläche 8, wodurch auch das Werkstück 2 im Bereich der Grenzfläche 8 zum Schmelzen gebracht wird. Beim nachfolgenden Abkühlen der beiden Werkstücke 1 und 2 entsteht ein Verbundbauteil 12 (Fig. 1b), wobei ein im Bereich der Grenzfläche 8 und der Schweißzone 9 liegender, eine Schweißnaht bildender Schweißwulst 14 zurückbleibt, durch den die beiden Werkstücke 1, 2 fest miteinander verbunden sind. Als Fügeflächen für die beiden Werkstücke 1, 2 sind hier die Oberflächen 4 und 5 zu betrachten.

Bei Anwendung der beschriebenen Schweißtechnik bildet sich auf der von der Grenzfläche 8 abgewandten Oberfläche 3 des absorbierenden Werkstücks 1 eine Einfallstelle 15 in Form einer kleinen, unterhalb der Schweißzone 9 liegenden Delle. Da es sich bei der Oberfläche 3 in der Regel um eine im eingebauten Zustand des Verbundbauteils 12 außen liegende, sichtbare Oberfläche handelt, bildet die Einfallstelle 15 eine optisch unschöne, z.B. für die Automobilwirtschaft nicht akzeptable Störung. Diese Störung tritt um so mehr in Erscheinung, je dünner das Werkstück 1 und je kleiner sein Absorptionskoeffizient ist.

Erfindungsgemäß wird das Werkstück 1 vor Beginn des Schweißvorgangs an denjenigen Stellen, wo ein Schweißvorgang stattfinden soll, mit einer erhabenen Struktur versehen, die in Richtung des transparenten Werkstücks 2 vorsteht und vorzugsweise senkrecht von der oberen Oberfläche 4 des Werkstücks 1 weg ragt. Die erhaben vorstehende Struktur wird in dem bisher für am besten gehaltenen Ausführungsbeispiel der Fig. 2 durch wenigstens zwei an das Werkstück 1 angeformte Stege 16 gebildet, die z. B. eine Höhe von a = 0,2 mm bis a = 1 mm und eine Breite von 1 mm bis 3 mm aufweisen. Im Gegensatz zu Fig. 1a wird das transparente Werkstück 2 dabei zu Beginn des Schweißvorgangs (Fig. 2a) nicht flächig auf das Werkstück 1, sondern nur bereichsweise auf freie Enden der Stege 16 aufgelegt, so dass ein Abstand a zwischen seiner unteren Oberfläche 5 und der oberen Oberfläche 4 des Werkstücks 1 vorhanden ist. Die Fügeflächen werden daher hier durch die freien Stirnflächen der Stege 16 und diesem zugeordnete Abschnitte der unteren Oberfläche des Werstücks 2 gebildet.

Die Verschweißung erfolgt dadurch, dass analog zu Fig. 1a, 1b einerseits die beiden Werkstücke 1 und 2 mittels eines Niederhalters 17 zusammengedrückt werden, andererseits ein gewählter Schweißzonenabschnitt 9a mit einem Laserstrahl 18 bestrahlt wird. Dabei wird wie beim Quasi-Simultan-Schweißen dafür gesorgt, dass der Laserstrahl mehrfach längs der erhabenen Struktur 16 hin- und herbewegt wird.

Wie Fig. 2b zeigt, unterscheidet sich das erfindungsgemäße Verfahren zunächst dadurch wesentlich vom Verfahren des Standes der Technik nach Fig. 1b, dass die Stege 16 vorhanden sind und der Verschweißvorgang so gesteuert wird, dass die Stege 16 zur Vermeidung der Einfallstellen 15 nur bis zu einer vorgewählten Resthöhe b (Pig. 2b) abgeschmolzen werden. Dadurch wird ein Veibundbauteil 19 erhalten, bei dem die beiden Werkstücke 1, 2 noch durch einen senkrecht zur Oberfläche 4 gemessenen Spalt 20 beabstandet sind. Dieser Spalt 20 ist zumindest so groß, dass ein aus geschmolzenem und dann wieder verfestigtem Material gebildeter, gemäß Fig. 2b am oberen Ende des Stegs 16 entstehender Schweißwulst 21 noch einen gewissen, wenn auch kleinen Abstand von der ihm zugeordneten Oberfläche 4 des Werkstücks 1 hat und diese nicht berührt. Mit anderen Worten ist der Schweißwulst 21 völlig im Spalt 20 angeordnet und nicht wie der Sehweißwulst 14 der Fig. 1b teilweise in die Oberfläche 3 eingelassen.

Ein weiterer wesentlicher Unterschied zum Stand der Technik besteht darin, dass die erhabenen Strukturen bzw. Stege 16 eine vorgewählte Größe (insbesondere Länge) nicht überschreiten und durch in Längs- und/oder Querrichtung sowie parallel zur Oberfläche 4 verlaufende Abstände bzw. Zwischenräume voneinander getrennt sind, die eine gewisse Mindestgröße (insbesondere Länge und/oder Breite) nicht unterschreiten. Zur Vermeidung der Einfallstellen 15 (Fig. 2) haben sich bisher Stege 16 mit einer Länge von nicht mehr als 60 mm und mit besonderem Vorteil von nicht mehr als 40 mm bei einer Breite von nicht mehr als 2 mm und Zwischenräume mit einer Länge und/oder Breite von wenigstens 4 mm bis 10 mm als am besten erwiesen, wobei die Zwischenräume um so größer sein sollten, je größer die einzelnen Stege 16 sind.

Durch die Erfindung werden somit trotz Anwendung großflächiger Bauteile keine entsprechend großen Schweißzonen vorgesehen. Vielmehr werden die beiden Werkstücke 1 und 2 längs mehrerer Schweißzonenabschnitte 9a durch wenigstens zwei, vorzugsweise mehr als zwei vergleichsweise schmale und kurze Schweißnähte miteinander verbunden.

Ein dritter Unterschied des erfindungsgemäßen Verfahrens zum Stand der Technik besteht darin, dass die Verschweißung nicht an allen Stegen 16 gleichzeitig, sondern zeitlich nacheinander erfolgt. Dies ist in Fig. 2b dadurch angedeutet, dass die beiden Werkstücke 1 und 2 z. B. zunächst nur im Bereich des links dargestellten, zum Schweißwulst 21 führenden Stegs 16 verbunden werden. Dabei wird der Druck mittels des Niederhalters 17 derart ausgeübt, dass die beiden Werkstücke 1, 2 vor allem im Bereich des in Fig. 2b linken Stegs 16 zusammengedrückt werden. In einem zweiten Verfahrensschritt wird dann der in Fig. 2b rechte Steg 16 bearbeitet und abgeschmolzen, bis er ebenfalls eine Resthöhe hat, die im wesentlichen dem Maß b entspricht. In diesem Verfahrensschritt ist der Niederhalter 17 so eingerichtet, dass er die Werkstücke 1 und 2 insbesondere im Bereich des in Fig. 2b rechten Stegs 16 zusammendrückt.

Untersuchungen haben ergeben, dass sich bei Anwendung der erhabenen Strukturen (z. B. Stege 16) keinerlei Einfallstellen mehr auf der sichtbaren Oberfläche 3 des absorbierenden Werkstücks 1 ergeben. Die Oberfläche 3 ist vielmehr einwandfrei und genügt höchsten Ansprüchen. Dies gilt insbesondere dann, wenn die Stege 16 bis auf eine Resthöhe von z. B. b = 0,1 mm bis 0,6 mm abgeschmolzen werden, wobei kleine Resthöhen b aus Stabilitätsgründen bevorzugt werden, obwohl das beschriebene Verfahren grundsätzlich auch mit größeren Resthöhen b realisierbar ist. Dabei sollte die Resthöhe b um so größer sein, je größer die ursprüngliche Höhe a (Fig. 2a) ist. Als besonders vorteilhaft wird außerdem angesehen, dass wegen der Anwendung von vergleichsweise klein dimensionierten Stegen 16 Laser mit vergleichsweise kleinen Leistungen an- gewendet werden können und die zum Zusammendrücken der Werkstücke 1 und 2 aufzuwendenden Kräfte vergleichsweise gering sind.

Wie Fig. 2a zeigt, wird der Niederhalter 17 beim Vorhandensein eines ausreichend biegesteifen Werkstücks 2 nur an einer zwischen zwei Stegen 16 liegenden Stelle angeordnet und die auf ihn ausgeübte Druckkraft durch das Werkstück 2 auf die Grenzflächen zwischen den Oberflächen 5 und den freien Stirnflächen der Stege 16 übertragen. Dadurch ergibt sich der wesentliche Vorteil, dass der Niederhalter 17 im Gegensatz zum Niederhalter 11 nach Fig. 1a, 1b nicht für die Laserstrahlung transparent sein muss, da er weit außerhalb des eigentlichen Schweißzonenabschnitts 9a angeordnet werden kann. Die Durchführbarkeit dieser Maßnahme wurde anhand eines Werkstücks 2 aus natürlichem, 2 mm dickem PC und einem Werkstück 1 aus grauem, 2,5 mm dickem APC/PBT unter Anwendung von ca. 1 mm hohen und 2 mm breiten Stegen 16 getestet. Die Länge der Schweißzonenabschnitte 9a bzw. der gebildeten Schweißwülste 21 betrug 50 mm bei einer Breite von 2 mm. Die Abstände der einzelnen Stege 16 voneinander betragen 10 mm.

Besteht das Werkstück 2 aus einem nicht ausreichend biegesteifen Material, kann derselbe Vorteil dadurch erzielt werden, dass gemäß Fig. 3 mit zwei Niederhaltern 22, 23 beidseits der Schweißzonenabschnitte 9a oder beidseits aller vorhandenen Schweißzonenabschnitte 9a auf das transparente Werkstück 2 eingewirkt wird. Je nachdem, wie sich dabei das Werkstück 2 durchbiegt, könnte auch ein dritter Niederhalter 24 vorgesehen werden, der analog zu Fig. 2a, 2b im Zwischenraum zwischen zwei erhabenen Strukturen wirksam gemacht wird. Wichtig ist in jedem Fall, dass die verwendeten Niederhalter lokal immer dort wirksam sind, wo gerade ein Schweißvorgang durchgeführt wird. Diese Verfahrensweise wurde an einem Werkstück 2 aus einem natürlichen, 1 mm starken PP in Verbindung mit einem Werkstück 1 aus schwarzem, 2,5 mm dickem TPO unter Anwendung von ca. 0,5 mm hohen und ca. 2 mm breiten Stegen 16 getestet. Die Schweißwulstlänge betrug hier 30 mm bei einem Abschweißweg von ca. 0,3 mm. Die mittels der Niederhalter 17 und 22 bis 24 ausgeübte Kraft betrug in beiden Fällen nur ca. 50 N pro Niederhalter. Trotz dieser kleinen Kräfte und der nahezu linienförmigen Auflageflächen werden hochfeste Verbindungen erhalten. Die Abstände der Stege 16 voneinander betragen wenigstens 6 mm.

In keinem der Fälle wurden Einfallstellen 15 entsprechend Fig. 1b beobachtet.

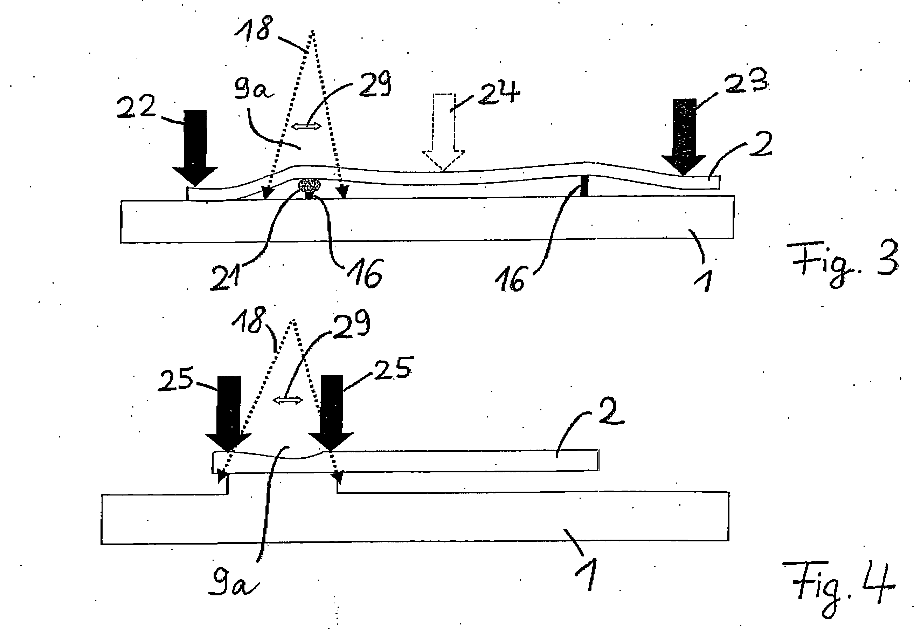

Ein weiteres Ausführungsbeispiel der Erfindung ist in Fig. 4 gezeigt. Im Gegensatz zum Durchstrahl-Laserschweißen wird hier das Werkstück 2 aus einem Material hergestellt, das die durchgehende Laserstrahlung zumindest teilweise absorbiert. Dadurch wird erreicht, dass zuerst das Werkstück 2 und dann durch Wärmeleitung auch das Werkstück 1 im Bereich des Schweißzonenabschnitts 9a zu schmelzen beginnt. Allerdings ist bei dieser Verfahrensweise ein für die Laserstrahlung transparenter Niederhalter 25 im unmittelbaren Bereich der Schweißzonenabschnitte 9a erforderlich, da wegen der durch eine Volumenabsorption im Werkstück 2 verursachten Plastifizierung in den Schweißzonenabschnitten 9a keine Niederhaltekraft auf das Werkstück 1, übertragen werden kann. An das Werkstück 1 angeformte, erhabene Strukturen bzw. Stege 26 haben hier zweckmäßig eine Breite, die etwa der Breite des Schweißzonenabschnitts 9a entspricht. Außerdem wird der Schweißvorgang hier vorzugsweise so gesteuert, daß nur eine geringe Wänneeinleitung in das Werkstück 1 erfolgt. Auch bei diesem Verfahrensbeispiel wurden keinerlei Einfallstellen beobachtet.

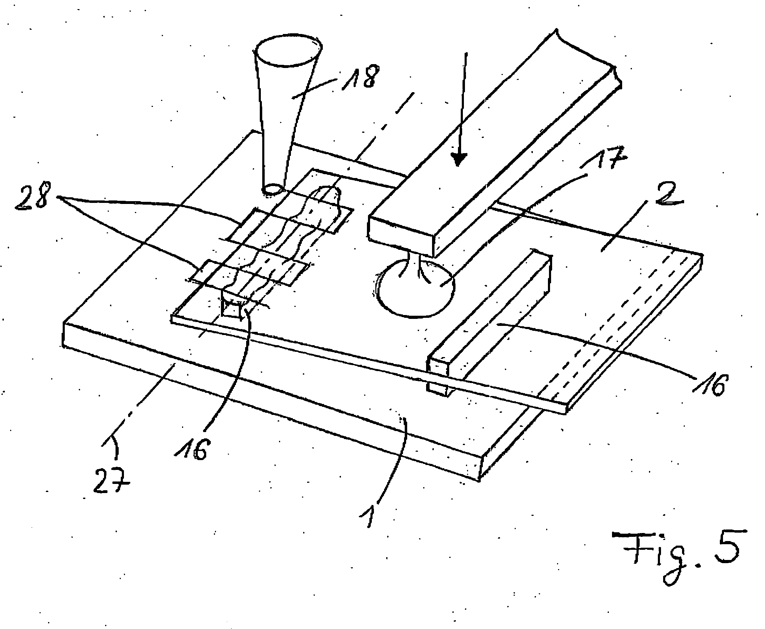

Bei einem weiteren bevorzugten Ausführungsbeispiel des erfindungsgemäßen Verfahrens wird gemäß Fig. 5, in der gleiche Teile mit denselben Bezugszeichen wie in Fig. 1 bis 4 verwendet sind, der Laserstrahl 18 nicht nur in Richtung einer Längsachse 27 einer erhabenen Struktur bzw. eines Stegs 16, sondern auch quer dazu hin und her geführt und dabei jeweils über die seitlichen Begrenzungen des Stegs 16 hinausbewegt, wie in Fig. 5 durch eine mäanderförmige Linie 28 angedeutet ist. In den Fig. 2a bis 4 ist diese Hin- und Herbewegung durch einen Doppelpfeil 29 angedeutet. Alternativ kann die Strahlführung auch längs einer sinusförmigen, dreieckigen oder anderen Linie erfolgen, wobei die Hin- und Rückwege in Abhängigkeit vom Durchmesser des Laserstrahls 18 vorzugsweise so gewählt sind, dass sie sich überlappen und dadurch zu einem gleichförmigen Schmelzen der Stege 16 führen. Außerdem wird der Laserstrahl 18 vorzugsweise so schnell ein- oder mehrfach vom Anfang zum Ende der Stege 16 geführt, dass deren Oberflächen auf der ganzen Länge schmelzen und das Werkstück 2 daher gleichmäßig relativ zum Werkstück 1 absinken kann. Ein Aufschmelzen und Verdampfen der Materalien außerhalb des Berührungsbereichs zwischen dem Werkstück 2 und den Stegen 16 ist dabei vemachläßigbar klein.

Ein besonderer Vorteil der zuletzt beschriebenen Maßnahme besteht darin, dass Toleranzen, insbesondere in Querrichtung bestehende Toleranzen leicht ausgeglichen werden können, die sich z. B. beim Auflegen des Werkstücks 1 auf die Aufnahme 7 (Fig. 1a) oder beim Fügen der beiden Werkstücke 1, 2 relativ zueinander ergeben. Das erfindungsgemäße Verfahren ist damit besonders gut für 3D-Anwendungn geeignet.

Ein weiterer Vorteil des erfindungsgemäßen Verfahrens ergibt sich daraus, dass die Werkstücke 1, 2 nicht durch einen einzigen, sehr langen Steg 16 od. dgl., sondern durch eine Mehrzahl von räumlich getrennten, vergleichsweise kurzen Stegen 16 bzw. erhabenen Strukturen miteinander verbunden werden. Bei Anwendung vieler kleiner Stege 16 ist es leichter, diese auf ihrer gesamten Länge gleichförmig zum Schmelzen zu bringen. Dabei wird außerdem, wie in Fig. 2b und 5 angedeutet ist, so vorgegangen, dass die vorhanden Stege 16 nicht gleichzeitig, sondern zeitlich nacheinander und gegebenenfalls unter Anwendung desselben Lasers bestrahlt und aufgeschmolzen werden. Wie Fig. 2b und 5 zeigen, sind dort die Werkstücke 1 und 2 zunächst nur durch den jeweils links dargestellten Steg 16 miteinander verbunden worden, wodurch sich eine leichte Schrägstellung des Werkstücks 2 ergibt. In einem nachfolgenden Verfahrensschritt wird dann auch der in Fig. 2b und 5 rechte Steg 16 teilweise aufgeschmolzen, bis auch er die Resthöhe b (Fig. 2b) besitzt. Insbesondere bei kleinen Anfangshöhen a für die Stege 16 lassen sich auf diese Weise schnell und effektiv viele kleine Schweißnähte herstellen, was insbesondere beim Verschweißen von vergleichsweise großflächigen Werkstücken von Vorteil ist. Übliche Stoßfänger können auf diese Weise z. B. alle 5 cm mit einer Schweißnaht versehen werden, wobei die Gesamtzahl der Schweißnähte von der Größe des mit dem Stoßfänger zu verbindenden Bauteils 2 abhängt. Da außerdem die Ausübung des Drucks jeweils nur lokal am Ort des sich jeweils bildenden Schweißwulstes 21 (Fig. 2b) erforderlich ist, lassen sich Toleranzen viel leichter ausgleichen, als dies der Fall wäre, wenn die beiden Werkstücke 1 und 2 auf ihrer ganzen Größe gleichmäßig zusammengedrückt werden müßten.

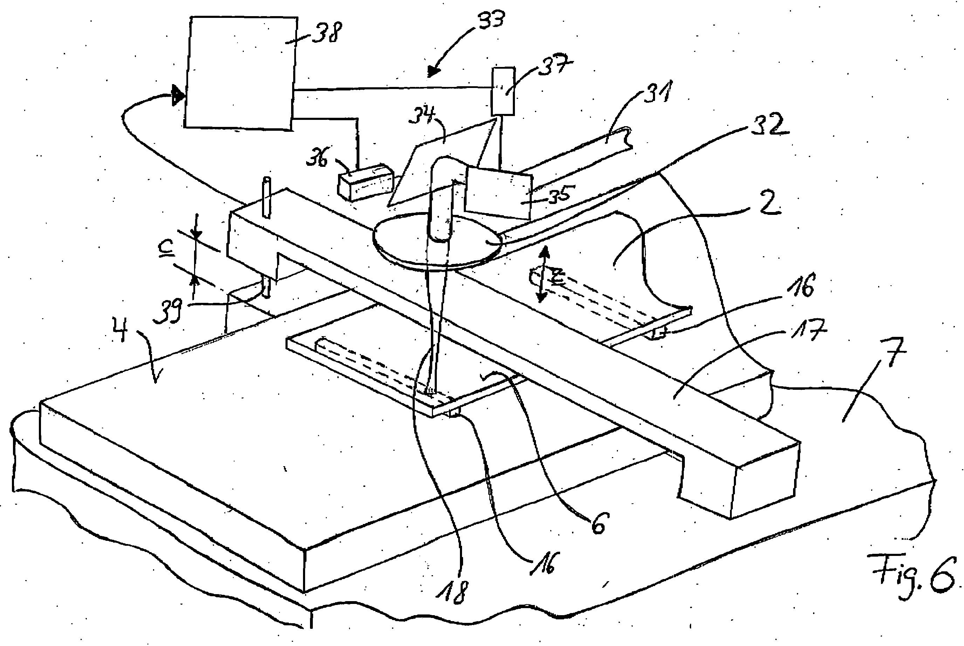

Fig. 6, in der wiederum gleiche Teile mit denselben Bezugszeichen wie in den Fig. 1 bis 5 versehen sind, zeigt schematisch eine zur Durchführung des beschriebenen Verfahrens geeignete Vorrichtung. Das auf der Aufnahme 7 liegende Werkstück 1 ist mit zwei Stegen 16 bzw. erhabenen Strukturen versehen, auf denen das Werkstück 2 aufliegt. Die Vorrichtung enthält nicht dargestellte Mittel zur Erzeugung eines Laserstrahls 31 und Mittel 32 zur Fokussierung des Laserstrahls 3 bzw. zur Umwandlung des Laserstrahls 31 in den fokussierten, auf das Werkstück 2 gerichteten Laserstrahl 18 gemäß Fig. 2a bis 5. Ferner weist die Vorrichtung Mittel 33 zur Führung des fokussierten Laserstrahls 18 über die Werkstückoberfläche längs einer vorgegebenen bzw. vorgewählten Schweißzone entsprechend Fig. 5 auf. Das Mittel zur Erzeugung des Laserstrahls 31 enthält z. B. einen üblichen, fasergekoppelten Diodenlaser mit einer Wellenlänge von 940 nm und einer Leistung von 40 Watt, wobei die üblichen Bestandteile eines Lasers wie Pumpquellen, Spiegel (Resonator), gegebenenfalls vorhandene Güteschalcez (Q-Switch) od. dgl. als bekannt vorausgesetzt werden und daher nicht dargestellt sind. Das Mittel 32 zur Fokussierung ist als einfache Linse dargestellt, die das übliche Objektiv (z. B. f-Theta-Objektiv) repräsentiert.

Als Mittel 33 zur Führung des Laserstrahls 18 wird vorzugsweise ein mit hoher Geschwindigkeit steuerbares System verwendet, das in Fig. 6 als sogenannter Galvanoscanner (z. B. ein Galvanoscanner mit Planfeldoptik f= 163 mm der Firma Rodenstock) dargestellt ist, der Verfahrgeschwindigkeiten von z. B. 10 mm/s bis 1000 mm/s ermöglicht. Der Galvanoscanner enthält im Ausführungsbeispiel zwei in X- bzw. Y-Richtung bewegliche Umlenkspiegel 34 und 35, die mit Antrieben 36 und 37 in Form von Magnetspulen, Servo- oder Schrittmotoren od. dgl. angetrieben werden können. Die Steuerung der Antriebe 36, 37 erfolgt vorzugsweise durch Computer, so dass der Bewegungsbahn des fokussierten Laserstrahls 18 z. B. entlang der Linie 28 in Fig. 5 mittels einer zur Steuerung der Antriebe 36, 37 vorgegebenen Software ein an sich beliebiger Verlauf gegeben werden kann. Stellvertretend für die zahlreichen Möglichkeiten zur Steuerung der Antriebe 36, 37 ist in Fig. 6 eine Steuervorrichtung 38 dargestellt, die ein Bestandteil des Mittels 33 ist.

Der Niederhalter 17, der entsprechend Fig. 2a, 2b außerhalb des Wirkungsbereichs des Laserstrahls 18 angeordnet ist, ist in Fig. 6 als ein quer über die Werkstücke 1, 2 erstreckter Balken dargestellt, der mit nicht näher dargestellten Mitteln in Richtung eines Doppelpfeils z senkrecht zu den Oberflächen 4 bzw. 6 der Werkstücke 1, 2 bewegt werden kann, um das Werkstück 2 auf die Stege 16 zu drücken und im Zuge des Aufschmelzens der Stege 16 weiter in Richtung des Werkstücks 1 zu bewegen. Um dabei eine zu große oder zu geringe Ausbildung der Resthöhe b (Fig. 2b) der Stege 16 zu vermeiden, ist der Niederhalter 17 mit einer Einrichtung zur Einstellung eines minimalen Abstands c zwischen dem Niederhalter 17 und der Aufnahme 7 versehen. Dabei ist die Einrichtung derart ausgebildet, dass jeder gewählten Resthöhe b ein Maß c zugeordnet werden kann, so dass die Herstellung eines bestimmten Abstands c gleichbedeutend mit der Erzielung einer bestimmten Resthöhe b ist. Die Einrichtung kann z. B. einen einstellbaren Stab 39 enthalten, der an einem Ende des Niederhalters 17 z. B. mittels eines Schraubgewindes drehbar gelagert und dadurch parallel zur Bewegung z des Niederhalters 17 verstellbar angeordnet ist. In diesem Fall würde der Bewegungshub des Niederhalters 17 mechanisch durch das Aufsetzen des Stabs 39 auf die Aufnahme 7 begrenzt. Alternativ kann der Stab 39 als Meßelement in Form eines Abstandsensors ausgebildet sein. In diesem Fall ist der Stab 39 zweckmäßig mit der Steuereinrichtung 38 verbunden, die ihrerseits die Bewegung des Niederhalters 17 steuert und dessen Antriebsmotor stillsetzt, sobald der Abstand c ein Maß erreicht hat, das der gewünschten Resthöhe b der Stege 16 entspricht. Mit Hilfe des Stabs 39 kann somit mechanisch oder elektrisch jede beliebige Resthöhe b eingestellt werden. Alternativ ist es natürlich auch möglich, an beiden Enden des Niederhalters 17 eine derartige Einrichtung oder andere Einrichtungen zur Festlegung bzw. Messung des Abstands c vorzusehen.

Beim Betrieb der Vorrichtung nach Fig. 6 ist es im übrigen mit Hilfe der Steuervorrichtung 38 möglich, den Laserstrahl 18 so zu steuern, daß er einzeln nacheinander die durch die Stege 16 vorgegebenen Schweißbahnen abfährt. Dazu kann zusätzlich vorgesehen sein, die den Laserstrahl 18 erzeugenden und fokussierenden Mittel und die Aufnahme 7 relativ zueinander beweglich anzuordnen.

Das erfindungsgemäße Endprodukt in Form des Verbundbauteils 19 (Fig. 2b) besteht aus dem die Laserstrahlung 18 absorbierenden Werkstück 1 und dem für die Laserstrahlung transparenten Werkstück 2, wobei die beiden Werkstücke 1, 2 durch den Spalt 20 getrennt und ausschließlich durch wenigstens zwei Schweißwülste 21 verbunden sind, die an erhaben über die Oberfläche 4 hinausragenden Stegen 16 od. dgl. ausgebildet sind und die Oberfläche 4 des Werkstücks 1 nicht berühren.

Vorteile der Erfindung sind neben den bereits beschriebenen Vorteilen darin zu sehen, dass wegen der gegenüber der Stegbreite vergrößerten Breite der Schweißwülste 21 auch dann eine hochfeste Verbindung erhalten wird, wenn die Stegbreite vergleichsweise klein ist, Schweißzeiten von wenigen Sekunden erreichbar sind, vergleichsweise niedrige Kräfte für die nur lokal wirksamen Niederhalter 17 und 22 bis 24 benötigt werden und eine hohe Flexibilität erhalten wird, da die Vorrichtung nach Fig. 6 für eine Vielzahl von unterschiedlichen Schweißaufgaben eingesetzt werden kann.

Die Erfindung ist nicht auf die beschriebenen Ausführungsbeispiele beschränkt, die auf vielfache Weise abgewandelt werden können. Insbesondere die angegebenen Formen und Dimensionen für die erhabenen Strukturen können in vielfacher Weise verändert werden. Anstelle der rechteckförmigen Stege 16 können auch solche mit trapezförmigen oder spitzwinkligen Querschnitten vorgesehen sein, und statt linearer Stege 16 sind längs Bögen oder längs geschlossener Linien (z. B. Kreise) verlaufende Strukturen möglich, sofern diese ausreichend kurz bemessen sind, wobei die Zahl und die Geometrie der Strukturen weitgehend von der jeweiligen Schweißaufgabe und den geforderten Festigkeiten abhängt. Weiter können andere als die dargestellten Niederhalter und insbesondere solche vorgesehen werden, die von anderen Technologien wie z. B. dem Ultraschall-Schweißen her bekannt sind. Dabei wäre es im Fall der Fig. 6 möglich, jeden Steg 16 einen separaten Niederhalter 17 zuzuordnen oder den Niederhalter 17 quer zu den Stegen 16 verfahrbar anzuordnen, um beim Bearbeiten eines durch einen Steg 16 gebildeten Schweißzonenabschnitts stets den gewünschten lokalen Druck parallel zum Pfeil z ausüben zu können. Weiter ist klar, dass die Stege 16 in Fig. 6 nicht nur quer zu ihrer Längsrichtung durch Spalte beabstandet, sondern auch in ihrer Längsrichtung in wenigstens zwei, durch wenigstens einen weiteren Zwischenraum beabstandete Abschnitte unterteilt sein können, um z. B. ihre Länge auf ein Maß von 60 mm oder weniger einzustellen. Dabei kann der Abstand zwischen zwei Stegen 16 auch auf wenigstens 20 Prozent der Länge der betreffenden Stege 16 bzw. des kleinsten zugehörigen Stegs 16 eingestellt werden, wenn es sich um einen Abstand zwischen unterschiedlich langen Stegen 16 handelt. Weiter kann die beschriebene Schweißtechnik auf andere thermoplastische Materialien angewendet werden, insbesondere solche, die zusätzlich Füllstoffe wie Talkum enthalten und/oder ganz oder teilweise aus Ethylen/Propylen-Dien-Terpolymer (EPDM) bestehen. Dabei ist klar, dass das beschriebene Verfahren auch auf solche Werkstücke angewendet werden kann, die nur in einem an die Oberfläche 4 grenzenden Abschnitt aus den angegebenen Materialien bestehen, in welchem Fall nur dieser Abschnitt das hier interessierende Werkstück 1 bildet. Schließlich versteht sich, dass die verschiedenen Merkmale auch in anderen als den beschriebenen und dargestellten Kombinationen angewendet werden können.

## Patentansprüche

1. Verfahren zum Verbinden von zwei Werkstücken (1, 2) aus thermoplastischen Kunststoffen mittels Laserschweißen längs wenigstens einer großflächigen Schweißzone, bei dem ein erstes der beiden Werkstücke (2) aus einem für eine Laserstrahlung transparenten und ein zweites der beiden Werkstücke (1) aus einem die Laserstrahlung absorbierenden Material hergestellt wird, und bei dem zur Vermeidung von Einfallstellen (15) an einer von dem ersten Werkstück (2) abgewandten Oberfläche (3) des zweiten Werkstücks (1)
- die Schweißzone aus einer Mehrzahl von Schweißzonenabschnitten gebildet wird, indem das zweite Werkstück (1) mit einer entsprechenden Mehrzahl von erhaben vorstehenden Strukturen (16, 26) versehen wird, die an wenigstens einem freien Ende je eine erste Fügefläche bilden, eine vorgewählte maximale Größe nicht überschreiten und durch Spalte voneinander getrennt sind, die eine vorgewählte minimale Größe nicht unterschreiten,
- eine Unterseite (5) des ersten Werkstücks (2) zur Bildung von mit den ersten Fügeflächen zusammenwirkenden, zweiten Fügeflächen verwendet wird, und
- die beiden Werkstücke (1, 2) dadurch miteinander verbunden werden, dass die Schweißzonenabschnitte einzeln nacheinander einem Quasi-Simultan-Schweißverfahren unterworfen werden, indem die Laserstrahlung wiederholt über die betreffenden Fügeflächen gelenkt wird, die beiden Werkstücke (1, 2) im Bereich dieser Fügeflächen lokal gegeneinander gedrückt werden und die zugehörigen erhabenen Strukturen (16, 26) nur bis zu einer vorgewählten Resthöhe (b) abgeschmolzen werden, so dass zwischen den beiden Werkstücken (1, 2) ein Spalt (20) verbleibt und ein aus abgeschmolzenem Material bestehender Schweißwulst (21) ohne Berührung mit dem zweiten Werkstück (1) in dem Spalt (20) aufgenommen wird.

2. Verfahren nach Anspruch 1, **dadurch gekennzeichnet, dass** die maximale Länge der erhabenen Strukturen (16, 26) 60 mm beträgt.

3. Verfahren nach Anspruch 1 oder 2, **dadurch gekennzeichnet, dass** die minimale Länge und/oder Breite der Zwischenräume zwischen den erhabenen Strukturen (16, 26) 4 mm bis 10 mm oder 20 Prozent der Länge der erhabenen Strukturen (16, 26) beträgt.

4. Verfahren nach einem der Ansprüche 1 bis 3, **dadurch gekennzeichnet, dass** die erhabenen Strukturen (16, 26) eine Höhe von 0,2 mm bis 1 mm aufweisen.

5. Verfahren nach einem der Ansprüche 1 bis 4, **dadurch gekennzeichnet, dass** die erhabenen Strukturen (16, 26) beim Schweißvorgang auf eine Resthöhe (b) von 0,1 mm bis 0,6 mm abgeschmolzen werden.

6. Verfahren nach einem der Ansprüche 1 bis 5, **dadurch gekennzeichnet, dass** das zweite Werkstück (1) eine Dicke von höchstens 3 mm aufweist.

7. Verfahren nach einem der Ansprüche 1 bis 6, **dadurch gekennzeichnet, dass** die beiden Fügeflächen dadurch gegeneinander gedrückt werden, dass an einer außerhalb der Schweißzonenabschnitte liegenden Stelle auf das transparente Werkstück (2) eingewirkt wird.

8. Verfahren nach Anspruch 7, **dadurch gekennzeichnet, dass** bei Anwendung eines transparenten Werkstücks (2) mit geringer Biegesteifigkeit beidseits der Schweißzonenabschnitte auf das transparente Werkstück (2) eingewirkt wird.

9. Verfahren nach Anspruch 7, **dadurch gekennzeichnet, dass** bei Anwendung eines transparenten Werkstücks (2) mit hoher Biegesteifigkeit zwischen zwei beabstandeten Schweißzonenabschnitten auf das transparente Werkstück (2) eingewirkt wird.

10. Verfahren nach einem der Ansprüche 1 bis 9, **dadurch gekennzeichnet, dass** das transparente Werkstück (2) im Bereich der Schweißzonenabschnitte aus einem die Laserstrahlung zumindest teilweise absorbierenden Material besteht.

11. Verfahren nach Anspruch 10, **dadurch gekennzeichnet, dass** die beiden Fügeflächen dadurch gegeneinander gedrückt werden, dass im Bereich der Schweißzonenabschnitte auf das zumindest teilweise absorbierende Werkstück (2) eingewirkt wird.

12. Verfahren nach einem der Ansprüche 1 bis 11, **dadurch gekennzeichnet, dass** der Laserstrahl (18) zur Durchführung eines Schweißvorgangs längs der erhabenen Strukturen (16) eines jeden Paars bewegt und dabei quer dazu hin und her und über seitliche Begrenzungen der Strukturen (16) hinaus bewegt wird.

13. Vorrichtung zum Verbinden von zwei Werkstücken (1, 2) aus thermoplastischen Kunststoffen durch Laserschweißen unter Anwendung des Verfahrens nach wenigstens einem der Ansprüche 1 bis 12, enthaltend: eine Aufnahme (7) für die Werkstücke (1, 2), Mittel zur Erzeugung eines Laserstrahls (18), Mittel (32) zur Fokussierung des Laserstrahls (18) auf eine Oberfläche (6) eines der Werkstücke (2), Mittel (33) zur Führung des Laserstrahls (18) längs dez Werkstückoberfläche (6), einen auf die Werkstückoberfläche (6) auflegbaren Niederhalter (17) und Mittel zur Bewegung des Niederhalters (17) in Richtung der Werkstückoberfläche (6), **dadurch gekennzeichnet, dass** den Mitteln zur Bewegung des Niederhalters eine außerhalb der Werkstücke (1, 2) angeordnete Einrichtung (39) zur Einstellung der vorgewählten Resthöhe (b) zugeordnet ist.

14. Vorrichtung nach Anspruch 13, **dadurch gekennzeichnet, dass** die Einrichtung (39) zur Einstellung eines minimalen Abstands (c) zwischen dem Niederhalter (17) und der Aufnahme (7) vorgesehen ist.

15. Vorrichtung nach Anspruch 13 oder 14, **dadurch gekennzeichnet, dass** die Einrichtung (39) wenigstens einen einstellbaren Stab aufweist, der zur Begrenzung der Bewegung des Niederhalters (17) in Richtung der Werkstückoberfläche (6) eingerichtet ist.

16. Vorrichtung nach Anspruch 13 oder 14, **dadurch gekennzeichnet, dass** die Einrichtung (39) wenigstens ein Meßelement zur Messung des Abstands (c) zwischen dem Niederhalter (17) und der Aufnahme (7) enthält.

17. Vorrichtung nach einem der Ansprüche 13 bis 16, **dadurch gekennzeichnet, dass** der Niederhalter (17) außerhalb des Wirkungsbereichs des Laserstrahls (18) angeordnet ist.

18. Vorrichtung nach einem der Ansprüche 13 bis 17, **dadurch gekennzeichnet, dass** das Mittel (33) zur Führung des Laserstrahls einen Galvanoscanner (34 bis 37) enthält.

19. Verbundbauteil, bestehend aus einem ersten, für Laserstrahlung (18) im wesentlichen transparenten Werkstück (2) und einem zweiten, Laserstrahlung (18) absorbierenden Werkstück (1), wobei die beiden Werkstücke (1, 2) längs einer durch Laserstrahlung (18) hergestellten Schweißnaht (9) miteinander verbunden sind, **dadurch gekennzeichnet, dass** die beiden Werkstücke (1, 2) durch einen Spalt (20) getrennt sind und die Schweißnaht zwischen wenigstens zwei an das absorbierende Werkstück (2) angeformten, erhaben vorstehenden Strukturen (16, 26) und einer Unterseite (5) des transparenten Werkstücks (2) gebildet ist, wobei die erhaben vorstehenden Strukturen (16, 26) eine vorgewählte maximale Größe nicht überschreiten und durch Spalte voneinander getrennt sind, die eine vorgewählte minimale Größe nicht unterschreiten.
